## Europäisches Patentamt

## European Patent Office

## Office européen des brevets

(11) Numéro de publication: **0 198 758**
**B1**

(12) **FASCICULE DE BREVET EUROPÉEN**

(45) Date de publication du fascicule du brevet:
12.07.89

(21) Numéro de dépôt: **86400696.0**

(22) Date de dépôt: **28.03.86**

(51) Int. Cl.⁴: **F 22 B 31/04,** F 23 C 1/00,
F 23 G 5/46

(54) Chaudière mixte à ordures ménagères et à combustible auxiliaire ainsi que son procédé de fonctionnement.

(30) Priorité: **05.04.85 FR 8505239**

(43) Date de publication de la demande:
**22.10.86 Bulletin 86/43**

(45) Mention de la délivrance du brevet:
**12.07.89 Bulletin 89/28**

(84) Etats contractants désignés:
**AT BE CH DE FR GB IT LI LU NL SE**

(56) Documents cité:
**DE-A-1 401 888**
**DE-A-1 401 890**
**FR-A-1 332 846**
**FR-A-1 374 108**
**FR-A-1 486 593**
**FR-A-2 271 509**
**FR-A-2 323 950**
**US-A-2 239 341**

(73) Titulaire: **CONSTRUCTIONS NAVALES ET
INDUSTRIELLES DE LA MEDITERRANEE, 35, rue
de Bassano, F-75008 Paris (FR)**

(72) Inventeur: **Truc, Joel, 246 Route du Revest, F-83200
Toulon (FR)**

(74) Mandataire: **Rodhain, Claude, 30, rue La Boétie,
F-75008 Paris (FR)**

## Description

L'invention concerne une chaudière mixte, du type constituée d'une installation de combustion couplée à un générateur de vapeur ou d'eau surchauffée, notamment pour l'alimentation d'un turbo-alternateur, ou d'un réseau de chauffage urbain ou industriel. La chaudière selon l'invention est plus particulièremext destinée à comporter un équipement de base assurant l'incinération d'ordures ménagères, avec récupération de la chaleur produite par la combustion, et un équipement intégré d'appoint fonctionnant au charbon ou à tout autre combustible auxiliaire permettant d'ajuster l'énergie fournie par la chaudière.

L'incinération est une solution utilisée de plus en plus par les villes et les agglomérations de moyenne et grande importance, pour se débarrasser des ordures ménagères collectées. Dans les agglomérations de plus de 200 000 habitants, les centres de traitement des ordures assurent généralement la récupération de la chaleur produite par l'incinération, ce qui permet d'une part de respecter les impositions légales relatives à la salubrité et à l'environnement en milieu urbain, et d'autre part de valoriser la chaleur produite quotidiennement à partir d'un combustible "gratuit et renouvelable" en la transformant en vapeur saturée ou surchauffée ou encore en eau surchauffée, le plus souvent livrée à un réseau de chauffage urbain, ou à un réseau industriel.

Cependant, on constate schématiquement, que la récupération de chaleur d'une usine d'incinération, qui est essentiellement fonction du tonnage d'ordures collectées et livrées à l'usine est quasiment constante au fil des jours dans une année d'exploitation, alors que la demande de chaleur du réseau de chauffage urbain est variable, essentiellement selon la température extérieure: faible en été, (eau chaude sanitaire) et maximale en hiver (eau sanitaire et chauffage); quant aux réseaux industriels, leur demande varie en fonction des modes de production.

De manière connue, cette inadéquation technique de l'énergie délivrée par une usine d'incinération, et des besoins saisonniers ou variables de chaleur, a conduit à fournir tout au long de l'année la chaleur de base à partir de l'usine d'incinération, et de la chaleur de pointe en fonction de la demande, à partir de chaufferies d'appoint, alimentées au mazout ou au charbon. Or, l'équipement en usine d'incinération d'une part, et en chaufferie d'appoint d'autre part, pour satisfaire les besoins variables des réseaux présente l'inconvénient d'être relativement onéreux, tant du point de vue de l'investissement initial, puiqu'il est nécessaire de créer deux usines distinctes, que du point de vue des coûts d'exploitation dans la mesure où des équipes d'exploitation sont nécessaires pour la chaufferie d'appoint, quand bien même ce ne serait que pour la moitié de l'année environ.

D'autre part, les chaufferies d'appoint au charbon souvent de faible puissance, sont équipées de chaudières à grille mécanique ou à projecteur, qui présentent de nombreux inconvénients principalement liés au type de combustible qu'elles impliquent, ainsi qu'aux contraintes de fonctionnement qui leurs sont inhérentes.

Ainsi, les chaudières à grille mécanigue ne peuvent être alimentées que par des produits "calibrés et fines grenues" ce qui conduit à prévoir des coûts de préparation, de sélection, de traitement et de stockage du combustible, et de trouver une utilisation pour les refus de criblage et notamment les charbons de trop faible granulométrie.

En second lieu, les possibilités de variation de qualite du charbon admissibles sont limitées, du fait de la conception de grilles mécaniques pour des fourchettes déterminées des caractéristiques des charbons. La variation de la qualité du charbon oblige en outre à apporter des modifications au réglage des installations.

Enfin, les chaudières avec foyers à grille ont une souplesse de fonctionnement assez limitée, et génèrent des coûts d'exploitation importants, notamment dûs au recours à un personnel qualifié.

En conséquence, ces contraintes imposées par les chaudières à grilles mécaniques, s'accommodent mal de l'utilisation des charbons n'ayant subi aucune préparation préalable, bruts d'importation, de granulométrie 0 - 50 mm, et de qualités très diverses.

Une chaudière mixte à chauffe d'appoint, correspondant au préambule de la revendication 1, est connue de la publication DE-A-1 401 890. On connaît également des chaudières multitubulaires pour la production de vapeur saturée ou surchauffée FR-A-2 323 950.

Afin de remédier aux nombreux inconvénients et limitations de la technique, l'objet de l'invention est de fournir une chaufferie mixte intégrée, alimentée pour le combustible de base en ordure ménagère, avec un combustible d'appoint tel que le charbon pulvérisé, le fioul, le gaz ou autres combustibles liquide ou gazeux.

Un autre objet essentiel de l'invention est de pouvoir notamment utiliser comme combustible d'appoint des charbons de toutes provenances, présentant des caractéristiques très variables, notamment en ce qui concerne leurs teneurs en matières volatiles et en cendres, et leurs granulométries.

Un objet complémentaire de l'invention est de permettre d'obtenir des variations de charge rapides, pour l'ensemble de la chaudière, comparables à celles obtenues avec des installations indépendantes à combustibles liquides ou gazeux.

D'une manière générale, l'installation selon l'invention doit per mettre de satisfaire les demandes d'appoint du réseau par l'utilisation du combustible auxiliaire, selon une solution économique et incitative.

Ces objectifs sont atteints au moyen d'une chaudière mixte à chauffe d'appoint intégrée et régulable, notamment pour l'alimentation d'un turboalternateur ou d'un réseau industriel ou de chauffage urbain, de type constituée d'une installation de combustion couplé à un générateur de vapeur, l'installation de combustion comprenant une chambre de combustion d'ordures ménagères, une chambre de combustion de combustible auxiliaire et une chambre de mélange des gaz de combustion, lesdites chambres étant juxtaposées l'une derrière l'autre et séparées par des parois pleines sensiblement verticales, de façon à délimiter le circuit de circulation des gaz de combustion, lesdites parois de séparation étant interrompues dans la partie supérieure de la chaudière pour définir des ouvertures de passage de gaz de combustion d'une chambre à l'autre,

caractérisée en ce que les parois latérales et les parois de séparation desdites chambres sont constituées de tubulures d'un circuit froid unique de circulation de l'émulsion eau-vapeur ou de l'eau chaude respectivement,

en ce que le circuit froid unique est constitué par les panneaux de tubulures de chaque paroi desdites chambres, montées en parallèle,

en ce que le panneau de tubulures de chaque paroi de séparation comporte un collecteur horizontal situé dans la partie supérieure de chacune desdites parois, et prolongé par un ensemble de tubes de dégagement espacés formant grille verticale située en travers de l'ouverture de passage des gaz de combustion.

Selon un mode de réalisation préférentiel de la chaudière selon l'invention, la chambre de combustion des ordures ménagères est située en tête de la chaudière, devant la chambre de combustion du combustible d'appoint, suivie de la chambre de mélange des gaz de combustion.

Selon un autre mode de réalisation de l'invention, l'installation de combustion est constitué d'une chambre de combustion unique comportant des brûleurs de combustible d'appoint montée à distance au-dessus d'une grille mobile de combustion d'ordures ménagères, ladite chambre de combustion unique communiquant dans sa partie supérieure avec la chambre de mélange des gaz de combustion.

De manière avantageuse, le générateur de vapeur utilisé dans l'un ou l'autre des modes de réalisation comprend soit un surchauffeur, soit un faisceau d'évaporation soit encore un faisceau de surchauffe d'eau, situés dans une enceinte, dont l'entrée communique avec la base de la chambre de mélange des gaz de combustion, et la sortie conduit à un économiseur.

L'utilisation d'une chambre de combustion de combustible auxiliaire pour réaliser la chauffe d'appoint de la chaudière selon l'invention, présente de nombreux avantages:

- un gain de rendement (de plusieurs points) par rapport aux chaudières à grille, du fait de l'amélioration de la combustion;
- une possibilité d'automatisation poussée grâce à la faible inertie du système de combustion;
- la suppression des dispositifs de réinjection des cendres volantes.

En outre, l'intégration de l'installation de chauffe de base, avec l'installation de chauffe d'appoint permet aux agglomérations et aux municipalités de réaliser une économie notable par rapport aux solutions avec "équipements séparés".

D'autres caractéristiques et avantages de l'invention apparaîtront à la lecture suivante de quelques modes de réalisation préférentiels donnés à titre d'exemples non limitatifs, et des dessins annexes, dans lesquels:

- la fig. 1a représente en coupe longitudinale, un mode de réalisation selon l'invention d'une chaudière mixte, à chambres de combustion séparées, destinée à produire de la vapeur saturée;
- la fig. 1b représente deux demi-coupes transversales selon les lignes A-A et B-B, de la chaudière mixte de la figure 1a;
- la fig. 2a représente, en coupe longitudinale, un mode de réalisation selon l'invention d'une chaudière mixte à chambres de combustion séparées, destinée à produire de la vapeur surchauffée;
- la fig. 2b représente deux demi-coupes selon les lignes A-A et B-B de la chaudière mixte de la figure 2a;
- la fig. 3 représente une vue en coupe transversale d'un mode de réalisation selon l'invention d'une chaudière mixte à chambre de combustion commune pour les ordures ménagères et de charbon pulvérisé.
- la fig. 4 représente une vue en coupe transversale d'un mode de réalisation selon l'invention d'une chaudière mixte à chambre de combustion commune, destinée à produire de l'eau surchauffée.

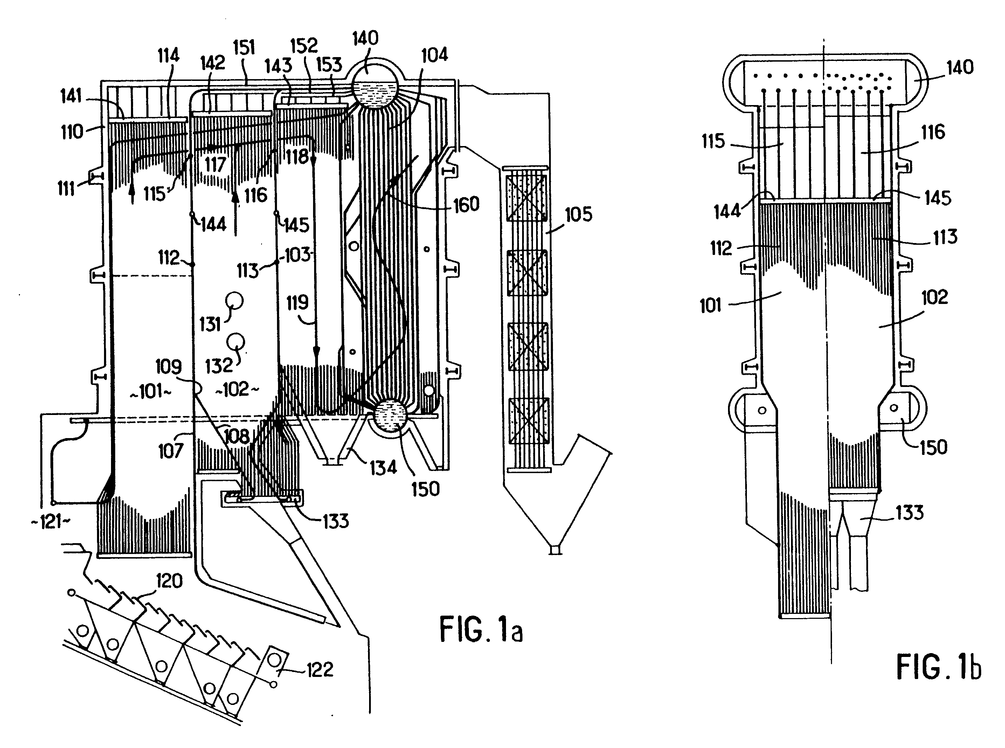

Le premier mode de réalisation de la chaudière mixte selon l'invention représenté en figures 1a et 1b concerne une unite de production de vapeur saturée.

Selon ce mode de réalisation, la chaudière mixte comprend deux chambres de combustion séparées, une première chambre 101 pour la combustion des ordures ménagères, et une seconde chambre 102 pour la combustion de charbon pulvérisé.

Tous les modes de réalisation représentés et discutés ci-après concernent des chaudières mixtes dont le combustible d'appoint est préférentiellement du charbon pulvérisé. Mais ces exemples ne sont donnés qu'à titre illustratif, l'invention couvrant également les installations à combustible auxiliaire liquide ou gazeux. La substitution du charbon pulvérisé aux autres combustibles utilisables est en outre aisée, du fait dela similitude de fonctionnement de l'installation dans chaque cas, en regard des contraintes d'exploitation.

Derrière ces deux chambres de combustion 101, 102 est juxtaposée une troisième chambre 103 de mélange des gaz de combustion suivie à son tour par une enceinte 104 de logement de faisceaux d'évaporation, puis d'un économiseur 105.

En conséquence, et selon ce mode de réalisation, l'équipement de combustion de la chaudière mixte est constitué par les deux chambres 101, 102 de combustion proprement dite, et la chambre 103 de mélange des gaz de combustion. Le générateur de vapeur est constitué d'une part par l'économiseur 105 et le faisceau d'évaporation 104, et d'autre part par les tubulures tapissant les parois de chacune des chambres 101, 102, 103 de l'équipement de combustion.

Selon le mode de réalisation représenté, la chambre 101 de combustion des ordures ménagères est placée en tête de la chaudière et du circuit de circulation des gaz de combustion, du fait de l'encombrement de son équipement d'alimentation.

L'enveloppe 110 de la chaudière, de section horizontale sensiblement rectangulaire, inclut les trois chambres 101, 102, 103 et l'enceinte du faisceau d'évaporation 104. Il s'agit de préférence d'une "enveloppe chaude", cerclée extérieurement par des profilés raidisseurs 111.

Les chambres 101, 102, 103 sont juxtaposées l'une derrière l'autre, et séparées par des parois 112, 113 pleines.

Ces parois verticales de séparation 112, 113 ne remontent pas jusqu'à la voûte 114 de la chaudière, mais s'interrompent dans leur partie supérieure de manière à délimiter des ouvertures 115, 116 respectivement de passage des gaz de combustion d'une chambre à l'autre.

En conséquence, les gaz des combustions suivent les trajets suivants:

- les gaz de combustion produits par la chambre 101 de combustion des ordures ménagères sont évacués par le haut de ladite chambre, à travers l'ouverture 115 et longent alors la voûte 114 de la chaudière le long de la flèche 117.
- les gaz de combustion produits dans la seconde chambre 102 de combustion de charbon pulvérisé sont évacués par le haut de ladite chambre 102 en rejoignant les gaz de combustion 117 provenant de la première chambre 101, et les deux flux traversent conjointement l'ouverture 116 de passage de la chambre 102 à la chambre 103, le long de la flèche 118;
- le mélange des gaz de combustion est ensuite aspiré selon un courant descendant 119 vers le bas de la chambre 103 de mélange de gaz de combustion, avant de pénétrer dans l'enceinte du faisceau d'évaporation 104.

La chambre 101 de combustion des ordures ménagères présente une installation d'incinération classique, à grille 120 mobile, préférentiellement du type à plan incliné à barreaux en gradin, animés d'un mouvement rétrograde.

Selon ce type d'installation, les ordures destinée à être brûlées sont introduites en 121 par un poussoir d'alimentation, et s'écoulent le long de la grille mobile 120 inclinée. La distribution d'air s'effectue par la surface inférieure de la grille 120, et le mouvement des éléments mobiles de la grille 120 assure un brassage du combustible, tout en le contraignant à remonter le long de la grille 120, de façon à optimiser la combustion. Le mâchefer est ensuite évacué, par l'intermédiaire du tambour d'extraction 122.

La grille mobile utilisée peut être de tous types adéquats notamment en fonction de la nature des ordures brûlées, et par exemple une grille mécanique à tapis mobile, ou encore un système de grilles à rouleaux, à poussoirs ou à bras oscillants.

En outre, l'installation peut comprendre une zone de séchage du combustible, ainsi qu'un circuit de réchauffage de l'air de combustion avant sa distribution à travers la grille 120, de façon à améliorer la combustion.

L'installation de combustion de la chambre 102 de combustion de charbon pulvérisé, est, de manière connue, constituée par exemple de plusieurs brûleurs 131, 132 superposé à chauffe frontale. Toutefois, les brûleurs peuvent être de tout autre type, par exemple à chauffe tangentielle ou à chauffe verticale. D'autre part, et de manière connue, la combustion est améliorée par un système de turbulence radiale ou axiale.

Les résidus de combustion sont évacués par le bas de la chambre 102 à travers un extracteur 133 débouchant vers la fosse de stockage du mâchefer provenant de la chambre 101 de combustion des ordures ménagères.

La chambre 103 de mélange des gaz de combustion est également pourvue d'un extracteur 134.

L'installation de génération de vapeur saturée est constituée d'un circuit relativement délicat à mettre en oeuvre, dans la mesure où elle doit pouvoir fonctionner pour des régimes de chauffe très variables, notamment en ce qui concerne la chambre 102 de combustion de charbon pulvérisé, l'ensemble des tubulures de l'émulsion eau-vapeur étant en outre connecté à un seul et même ballon 140.

La récupération de la chaleur de combustion dans chacune des chambres 101, 102 s'effectue par l'intermédiaire de tubulures parcourant chacune des quatre parois des chambres, à savoir trois parois latérales et la paroi de séparation 112 pour la première chambre 101 de combustion des ordures ménagères, et les deux parois de séparation 112, 113 ainsi que deux parois latérales opposées pour la chambre 102 de combustion de charbon pulvérisé.

De manière préférentielle, les tubulures de l'émulsion eau-vapeur, qui parcourent les parois latérales et les parois de séparation des chambres 101, 102, 103 sont constituées par des tubes à ailettes filées soudées les unes aux autres.

Comme on peut le voir en figure 1, les tubulures verticales de la paroi latérale visibles pour chacune des chambres 101, 102, 103 aboutissent, à proximité de la voûte 114 de la chaudière, dans un collecteur horizontal 141, 142, 143, respectivement, s'étendant chacun sur toute la largeur de la paroi correspondante. Dans ces collecteurs horizontaux 141, 142, 143 sont piqués quelques tubes verticaux aboutissant à un tube de dégagement 151, 152, 153 respectivement, connecté au ballon 140.

Chacune des autres parois latérales présente la même configuration.

De même, les parois de séparation 112, 113, comme représenté en figure 1b, présentent à leur partie supérieure (qui est largement au-dessous de la voûte 114 de la chaudière de façon à ménager les ouvertures 115, 116 de passage des gaz de combustion) un collecteur horizontal 144, 145 sur lequel sont piqués des tubes espacés formant une grille verticale traversant l'ouverture 115, 116 de passage des gaz de combustion ces tubes étant connectés aux tubulures de dégagement aboutissant au ballon 140.

De manière avantageuse, chaque collecteur horizontal des parois des chambres 101, 102, 103, parallèle aux parois de séparation 112, 113, est également connecté à plusieurs tubes de dégagement parallèles aboutissant à intervalles réguliers sur une même génératrice horizontale du ballon 140 de forme sensiblement cylindrique.

Le faisceau d'évaporation 104 est monté, de manière connue, entre le ballon supérieur 140 et un ballon inférieur 150, et les gaz de combustion sont guidés selon un parcours en zig-zag selon le trajet montant 160, avant d'être évacués vers l'extérieur à travers l'économiseur 105.

Les tubulures de circulation de l'émulsion eau-vapeur dans les parois de chacune des chambres de la chaudière mixte selon l'invention sont alimentées à partir du ballon 140, par l'intermédiaire de tubulures d'alimentation aboutissant à la base des parois des chambres 101, 102, 103.

Le ballon 140 sert de réservoir de séparation des deux phases de l'émulsion eau-vapeur, et peut fonctionner avec un dispositif du type des cyclones, et/ou un sécheur secondaire.

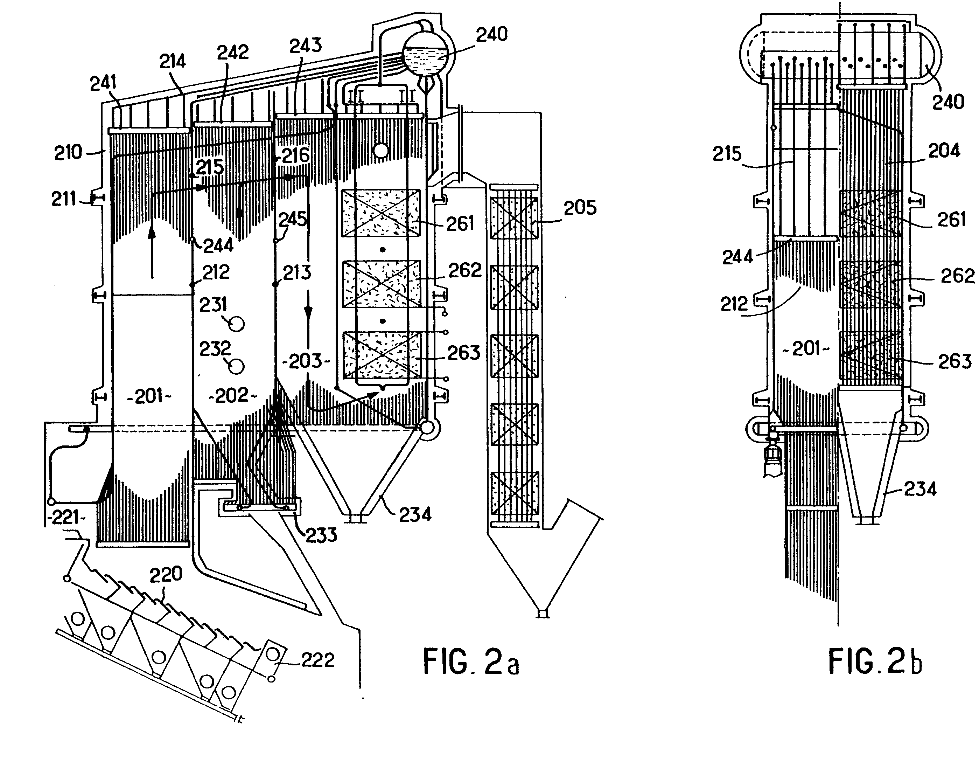

Si l'on se réfère aux figures 2a et 2b, concernant un second mode de réalisation préférentiel de la chaudière mixte selon l'invention, on retrouve une configuration identique au premier mode de réalisation précédemment décrit en ce qui concerne l'installation de combustion. La différence entre les deux modes de réalisation intervient pour le générateur de vapeur, qui comprend ici un surchauffeur, de façon à produire de la vapeur surchauffée.

Ainsi, l'installation de combustion comprend également une première chambre 201 de combustion des ordures ménagères, une seconde chambre 202 de combustion de charbon pulvérisé, et une troisième chambre 203 de mélange des gaz de combustion produits.

On ne procèdera pas à une nouvelle description détaillées de chacune des chambres, dans la mesure où elle est identique à la description précédente effectuée à propos des figures 1a et 1b. On pourra noter que les mêmes éléments sont désignés par les mêmes références dans les figures représentant les deux modes de réalisation, à l'exception du chiffre des centaines.

De manière connue, le surchauffeur 204, monté entre la chambre 203 de mélange des gaz de combustion et un économiseur 205, est constitué de trois paquets de tubes 261, 262, 263, superposés et connectés entre une sortie de vapeur du réservoir 240 de séparation des phases de l'émulsion, et une prise de distribution vers le réseau, de la vapeur surchauffée produite. Le nombre de paquets de tubes du surchauffeur n'est pas une caractéristique limitative de l'invention.

De manière préférentielle, on adopte pour la circulation de la vapeur dans les tubulures du surchauffeur 204 la disposition méthodique et/ou anti-méthodique.

Des étapes de dé-surchauffe de la vapeur sont prévues entre les paquets de tubes 261, 262, 263, afin de réguler les caractéristiques de la vapeur produite, par injection d'eau.

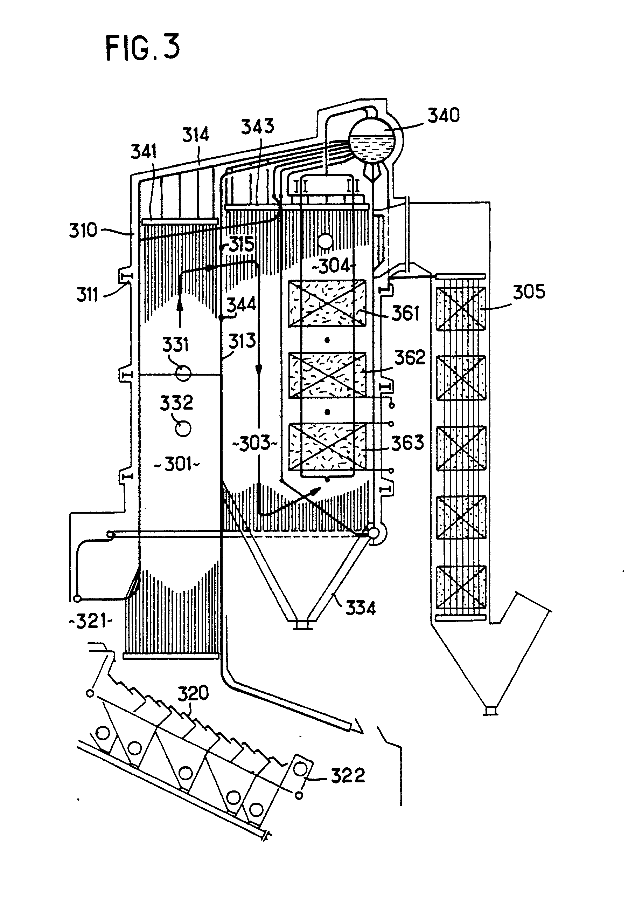

Le troisième mode de réalisation représenté en figure 3, consiste en une version condensée de la chaudière des figures 2a et 2b, dans la mesure où elle ne comporte qu'une seule et unique chambre de combustion 301, équipée à la fois d'une grille mobile 320 de combustion d'ordures ménagères, et de plusieurs brûleurs 331, 332 de charbon pulvérisé, montés sur les parois de la même chambre 301, à distance de la grille 320.

En conséquence, le haut de la chambre 301 communique, à travers une ouverture 315 délimitée par l'interruption de la paroi unique de séparation 312, directement avec la chambre 303 de mélange des gaz de combustion, communiquant à son tour par sa base, avec un générateur de vapeur à surchauffeur 304, identique à celui des figures 2a, 2b.

La conception de la chaudière mixte selon l'invention avec une unique chambre 301 de combustion présente plusieurs avantages.

D'une part, le mélange des deux flux des gaz de combusiton est optimisé, dans la mesure où il s'effectue directement dans la chambre de combustion elle-même, la chambre 303 servant à parfaire cette homogénéisation du flux gazeux total, parallèlement à sa fonction de surface d'échange de chaleur complémentaire.

D'autre part, le fonctionnement d'un équipement de combustion pour ordures ménagères, sur grille mobile, conduit à distribuer systématiquement de l'oxygène excédentaire à travers la grille, du fait des problèmes particuliers de combustion des ordures. Dans le cas où les brûleurs 331, 332 sont situés au-dessus de la grille, cet oxygène excédentaire est avantageusement utilisé pour la combustion du charbon pulvérisé, ce qui optimise la qualité de la combustion, et donc le rendement general de la chaudière.

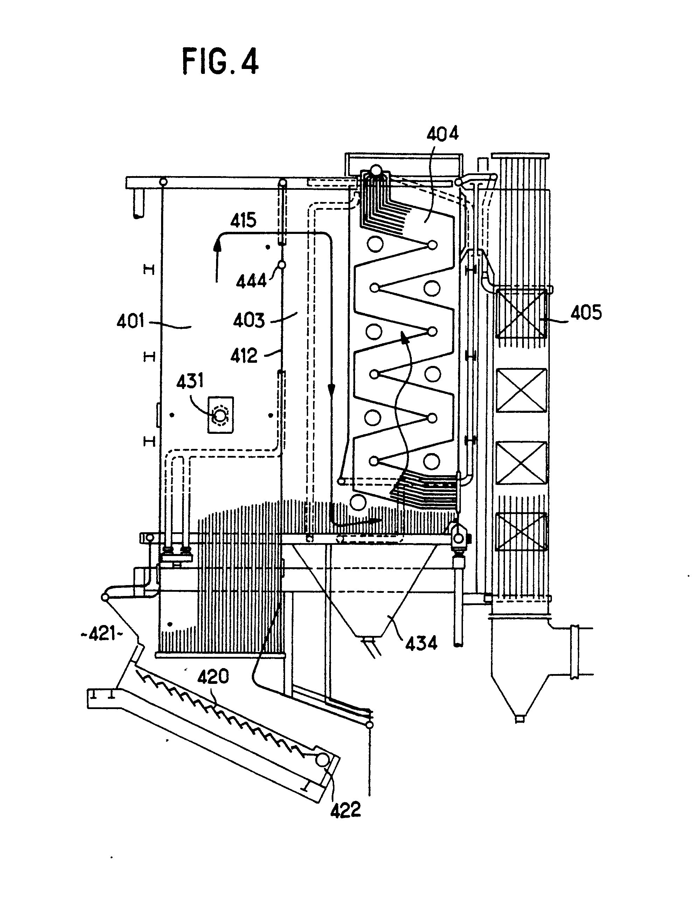

La figure 4 représente le schéma d'une chaudière mixte selon l'invention, à chambre commune de combustion d'ordures ménagères et de charbon pulvérisé, destinée à la production d'eau surchauffée. Dans ce cas, l'installation de combustion diffère peu de celle présentée en figure 3, et l'on retrouve dans la chambre commune 401 d'une part une grille 420 de combustion des ordures ménagères introduites en 421, et évacuées par le tambour d'extraction 422, et d'autre un brûleur 431 unique de combustion de charbon pulvérisé.

En revanche, le générateur d'eau surchauffée est, de manière connue, sensiblement différent des générateurs de vapeur décrits précédemment. En effet, la chaudière ne comporte pas de ballon, et la circulation de l'eau chaude y est organisée entièrement en série: le circuit froid passe en effet successivement dans l'économiseur 405, dans un faisceau de surchauffe en S 404, dans les panneaux de tubulures de la chambre unique de combustion 401, puis dans la chambre 403 de mélange des gaz de combustion, et enfin dans la chambre contenant le faisceau 404 de surchauffe.

Il est clair que la production d'eau surchauffée pouvait tout aussi bien être réalisée à partir d'une chaudière mixte à chambres séparées, l'installation de combustion étant alors analogue à celle représenté en figures 1a et 2a.

5

Dans chacun des modes de réalisation présentés en figures 1 à 4, la présence des chambres 103, 203, 303, 403 de mélange des gaz de combustion améliore l'efficacité et le rendement de la chaudière.

Selon un autre mode de réalisation de l'invention, la chaudière mixte ne comporte pas de chambre de mélange des gaz de combustion. Cette configuration est particulièrement envisageable dans le cas d'une chaudière selon l'invention à chambre commune de combustion.

Les chambres de mélange permettent tout d'abord d'augmenter les surfaces d'échange par rayonnement, puisqu'elles sont revêtues par des panneaux de tubulures dans lesquels circule le fluide froid, à savoir soit une émulsion eau-vapeur, soit de l'eau chaude seulement dans le cas de la production d'eau surchauffée (figure 4).

En second lieu, la présence des chambres 103, 203, 303, 403 de mélange des gaz de combustion permet une meilleure maîtrise des températures et des vitesses de circulation des gaz de combustion, ainsi que de la température des cendres volantes.

Ces caractéristiques de la veine gazeuse sont essentielles car les cendres volantes doivent être solidifiées avant que la veine gazeuse ne traverse les tubulures d'évaporateur ou de surchauffeur, pour éviter qu'elles s'y agglomèrent et provoquent une obstruction du circuit chaud.

Enfin, la présence d'une chambre de mélange est particulièrement favorable pour homogénéiser la veine gazeuse, constituée des gaz de combustion issus d'une part des ordures ménagères, et d'autre part du charbon pulvérisé.

Il est à noter que la grille des tubes de dégagement traversant les ouvertures 115, 116, 215, 216, 315, 415 de passage des gaz de combustion d'une chambre à l'autre, et en provenance du collecteur supérieur des parois de séparation des chambres, est constituée de tubes largement espacés et de diamètre nettement plus important que les tubulures des parois de séparation, puisqu'ils doivent acheminer la totalité du volume du fluide froid provenant des tubulures.

Pour ce qui est des panneaux de tubulures eux-mêmes, constituant les parois de séparation des chambres, ils sont de manière préférentielle réalisés en une seule couche, les tubulures faisant donc face d'un côté au gaz contenu dans la première chambre, et de l'autre côté au gaz contenu dans la seconde chambre. Néanmoins, pour assurer une circulation satisfaisante, les tubulures de ces parois de séparation sont de plus grand diamètre que celles des parois latérales des chambres. Il en est ainsi par exemple dans le mode de réalisation de la figure 1a, pour la paroi de séparation 112 placée entre la chambre 101 de combustion des ordures ménagères et la chambre 102 de combustion du charbon pulvérisé, dont les tubulures montantes augmentent de diamètre au-dessus du point de jonction 109 par rapport aux tubulures 107, 108 qui viennent s'y joindre.

Les chaudières mixtes selon l'invention peuvent être réalisées pour des puissances très diverses.

A titre d'exemple chiffré, les chaudières des modes de réalisation représentés sur les figures 1a, 1b, 2a, et 2b concernent des chaudières de puissance nominale de 20 MW thermiques, dont 10 MW provenant des ordures ménagères et 10 MW provenant du charbon pulvérisé lors du fonctionnement à pleine charge.

Les plages de variations attendues en exploitation sont:

- pour les ordures ménagères: de 50 à 100 %, soit 5 à 10 MW;
- pour le charbon pulvérisé: de 0 à 100 %, soit 0 à 10 MW.

Ces performances sont obtenues pour des chambres de chaudière de volume suivant:

|  | L | P | H |
|---|---|---|---|
| - chambre O.M | 2.700 | 4.400 | 14.000 |
| - chambre C.P | 2.775 | 4.400 | 11.000 |
| - chambre Inter | 2.000 | 4.400 | 10.000 |

Le fonctionnement d'une chaudière mixte selon l'invention, quelque soit le mode de réalisation choisi, présente les paramètres spécifiques suivants:

- tout d'abord, le dimensionnement des différentes chambres de combustion et de mélange des gaz de combustion doit permettre de refroidir suffisamment la température des fumées avant qu'elles n'atteignent les parties convectives de la chaudière, à savoir ou bien le faisceau d'évaporation 104, ou le surchauffeur 204, 304, ou éncore le faisceau de surchauffe d'eau 404.
- le flux gazeux atteignant les échangeurs 104, 204, 304, 404 doit en outre être relativement homogène, ce qui suppose un brassage suffisant des gaz de combustion produits par les ordures ménagères et par le charbon pulvérisé, ainsi qu'un dosage de ces deux gaz.
- enfin, la circulation de l'émulsion eau-vapeur doit pouvoir être assurée dans toutes les configurations de fonctionnement de la chaudière, c'est-à-dire aussi bien lorsque seule la chambre 101, 201, 301, 401 de combustion des ordures ménagères fonctionne que lorsque les brûleurs de charbon pulvérisé sont également activés. A cet effet, et dans le cas du mode de réalisation à chambres de combustion séparées, on prévoit un équipement de circulation assistée pour les tubulures des parois de la chambre 102, 202 de combustion de charbon pulvérisé. Cet équipement peut être utilisé notamment en été, lorsque le réseau de chauffage urbain desservi ne requiert pas de chauffe d'appoint, et que les brûleurs de charbon pulvérisé sont donc inutilisés.

Il est à noter que cette configuration minimale de fonctionnement de la chaudière mixte selon l'invention, peut être relativement fréquente, dans la mesure où le minimum technique requis pour l'activation des brûleurs de charbon pulvérisé correspond à environ 30 % de la capacité maximale de combustion. En dessous de cette valeur, il est en effet difficile d'entretenir l'auto-stabilité du foyer de combustion.

La régulation de la chaudière s'effectue notamnent au moyen de deux paramètres principaux:

- tout d'abord, on fait fonctionner la chambre 101, 201, 301 de combustion d'ordures ménagères selon le régime de base souhaité, qui peut être différent en fonction de la demande du réseau, ou encore du combustible disponible.
- on ajuste ensuite, le cas échéant, la production de vapeur ou d'eau surchauffée de la chaudière en alimentant de manière régulée les brûleurs 131, 132, 231, 232, 331, 332, 431 de la chambre 102, 202, 301, 401 de combustion du charbon pulvérisé d'appoint.

## Revendications

1. Chaudière mixte à chauffe d'appoint intégrée et régulable, notamment pour l'alimentation d'un turboalternateur ou d'un réseau industriel ou de chauffage urbain, de type constituée d'une installation de combustion couplée à un générateur de vapeur, l'installation de combustion comprenant une chambre (101, 201, 301, 401) de combustion d'ordures ménagères, une chambre (102, 202, 301, 401) de combustion de combustible auxiliaire et une chambre (103, 203, 303, 403) de mélange des gaz de combustion, lesdites chambres (101, 102, 103; 201, 202, 203; 301, 303; 401, 403) étant juxtaposées l'une derrière l'autre et séparées par des parois pleines sensiblement verticales (112, 113; 212, 213; 312; 412), de façon à délimiter le circuit de circulation des gaz de combustion, lesdites parois de séparation étant interrompues dans la partie supérieure de la chaudière pour définir des ouvertures (115, 116; 215, 216; 315; 415) de passage des gaz de combustion d'une chambre à l'autre,
caractérisée en ce que les parois latérales et les parois de séparation desdites chambres (101, 102, 103; 201, 202, 203; 301, 303; 401, 403) sont constituées de tubulures d'un circuit froid unique de circulation de l'émulsion eau-vapeur ou de l'eau chaude respectivement,
en ce que le circuit froid unique est constitué par les panneaux de tubulures de chaque paroi desdites chambres (101, 102, 103; 201, 202, 203; 301, 303), montées en parallèle,
en ce que le panneau de tubulures de chaque paroi de séparation (112, 113; 212, 213; 312) comporte un collecteur horizontal (144, 145; 244, 245; 344; 444) situé dans la partie supérieure de chacune desdites parois, et prolongé par un ensemble de tubes de dégagement espacés formant une grille verticale située en travers de l'ouverture (115, 116; 215, 216; 315; 415) de passage des gaz de combustion.

2. Chaudière selon la revendication 1, caractérisée en ce que la chambre de combustion (101, 201) des ordures ménagères est à grille mobile, et constitue la chambre de tête de la chaudière.

3. Chaudière selon la revendication 2, caractérisée en ce que la chambre de combustion (102, 202) de combustible auxiliaire constitue la chambre intermédiaire de la chaudière, et comporte au moins deux brûleurs (131, 132; 231, 232) superposés à chauffe frontale.

4. Chaudière selon la revendication 1, caractérisée en ce que les panneaux de tubulures dudit circuit froid de la chambre de combustion (102, 202) de combustible auxiliaire sont reliés à des pompes d'assistance à la circulation naturelle.

5. Chaudière selon la revendication 1, caractérisée en ce que l'équipement de combustion est constitué d'une chambre unique de combustion (301, 401) comportant au moins un brûleur (331, 332; 431) de combustible auxiliaire, monté à distance au-dessus d'une grille mobile (320, 420) de combustion d'ordures ménagères, ladite chambre de combustion (301, 401) communiquant dans sa partie supérieure avec la chambre (303, 403) de mélange des gaz de combustion.

6. Chaudière selon l'une quelconque des revendications 1 à 5, caractérisée en ce que ledit combustible auxiliaire appartient au groupe comprenant le charbon pulvérisé, le fuel, et les combustibles liquides et/ou gazeux.

7. Chaudière selon la revendication 1, caractérisée en ce que le générateur de vapeur comprend un faisceau d'évaporation (104) monté dans une enceinte dont l'entrée communique avec la base de la chambre (103) de mélange des gaz de combustion, et la sortie conduit à un économiseur (105).

8. Chaudière selon la revendication 1, caractérisée en ce que le générateur de vapeur comprend un surchauffeur (204) dont l'entrée communique avec la base de la chambre (203) de mélange des gaz de combustion, et la sortie conduit à un économiseur (205).

9. Chaudière selon la revendication 1, caractérisée en ce que le générateur d'eau surchauffée comprend un faisceau de surchauffe (404) dont l'entrée communique avec la base de la chambre (403) de mélange des gaz de combustion et la sortie conduit à un économiseur (405).

10. Procédé de fonctionnement d'une chaudière mixte selon l'une quelconque des revendications 1 à 9, caractérisé en ce qu'on fait fonctionner en base la chambre (101, 201, 301, 401) de combustion d'ordures ménagères, et on ajuste ensuité, à la demande, la production de vapeur ou d'eau chaude de la chaudière en alimentant de manière régulée les brûleurs (131, 132; 231, 232; 331, 332; 431) de la chambre (102, 202; 301; 401)

EP 0 198 758 B1

de combustion du combustible auxillaire.

11. Procédé de fonctionnement d'une chaudière mixte selon l'une quelconque des revendications 1 à 4 et 7 à 9, caractérisé en ce que l'on fait fonctionner seulement la chambre (101, 201) de combustion d'ordures ménagères, et qu'on alimente en circulation assistée les tubulures des parois de chambre (102, 202) de combustion de combustible auxiliaire inactivée.

12. Procédé de fonctionnement d'une chaudière mixte, à chambre commune (301, 401) de combustion selon l'une quelconque des revendications 1 ou 6 à 9, caractérisé en ce qu'on distribue un excès d'air à la grille (320, 420) de combustion des ordures ménagères, et en ce qu'on réduit le débit d'air de combustion introduit par les brûleurs (331, 332; 431) de combustible auxiliaire en correspondance avec l'oxygène résiduel subsistant dans la veine gazeuse issue de ladite grille de combustion (320; 420).

**Patentansprüche**

1. Mischkessel mit integrierter und regulierbarer Zusatzfeuerung, insbesondere zur Versorgung eines Turbo-Wechselstromgenerators oder eines Industrienetzes oder einer Fernheizung, mit einer an einen Dampferzeuger angeschlossenen Verbrennungsanlage, die eine Brennkammer (101, 201, 301, 401) für Haushaltsmüll, eine Brennkammer (102, 202, 301, 401) für Hilfsbrennstoff und eine Mischkammer (103, 203, 303, 403) zur Vermischung der Rauchgase aufweist, wobei die Kammern (101, 102, 103; 201, 202, 203; 301, 303; 401, 403) nebeneinander angeordnet und durch volle, im wesentlichen vertikale Wände (112, 113; 212, 213; 312; 412) abgetrennt sind, um den Zirkulationskreislauf der Rauchgase abzugrenzen, und wobei die Trennwände in dem oberen Abschnitt des Kessels unterbrochen sind, um Öffnungen (115, 116; 215, 216; 315; 415) für den Durchtritt der Rauchgase von einer Kammer in die andere zu definieren, dadurch gekennzeichnet, daß

die Seitenwände und die Trennwände der Kammern (101, 102, 103; 201, 202, 203; 301, 303; 401, 403) aus Rohrleitungen eines gemeinsamen Kühlkreislaufs mit einer zirkulierenden Wasser-Dampf-Emulsion bzw. Heißwasser gebildet sind,

daß der gemeinsame Kühlkreislauf aus der Rohrleitungstäfelung jeder Wand der parallel zueinander montierten Kammern (101, 102, 103; 201, 202, 203; 301, 303) gebildet ist, und

daß die Rohrleitungstäfelung jeder Trennwand (112, 113; 212, 213; 312) einen horizontalen Sammler (144, 145; 244, 245; 344; 444) aufweist, der in dem oberen Abschnitt jeder Wand angeordnet und durch eine Gruppe voneinander beabstandeter Abgaberohre verlängert ist, die ein quer zur Öffnung (115, 116; 215, 216; 315; 415) für den Durchtritt der Rauchgase angeordnetes vertikales Gitter bilden.

2. Kessel nach Anspruch 1, dadurch gekennzeichnet, daß die Brennkammer (101, 201) für den Haushaltsmüll ein Wanderrost aufweist und die vorderste Kammer des Kessels bildet.

3. Kessel nach Anspruch 2, dadurch gekennzeichnet, daß die Brennkammer (102, 202) für den Hilfsbrennstoff die mittlere Kammer des Kessels bildet und wenigstens zwei Brenner (131, 132; 231, 232) aufweist, die zur stirnseitigen Befeuerung übereinander angeordnet sind.

4. Kessel nach Anspruch 1, dadurch gekennzeichnet, daß die Rohrleitungstäfelung des Kühlkreislaufs der Brennkammer (102, 202) für den Hilfbrennstoff über Zusatzpumpen an die natürliche Zirkulation angeschlossen ist.

5. Kessel nach Anspruch 1, dadurch gekennzeichnet, daß die Verbrennungsanlage aus einer gemeinsamen Brennkammer (301, 401) besteht, die wenigstens einen Brenner (331, 332; 431) für Hilfsbrennstoff aufweist, der beabstandet über einem Wanderrost (320, 420) zur Verbrennung von Haushaltsmüll befestigt ist, und daß die Brennkammer (301, 401) in ihrem oberen Abschnitt mit der Mischkammer (303, 403) für die Rauchgase in Verbindung steht.

6. Kessel nach einem der Ansprüche 1 bis 5, dadurch gekennzeichnet, daß der Hilfsbrennstoff zu der Kohlenstaub, Heizöl und Flüssig- und/oder Gasbrennstoffe umfassenden Gruppe gehört.

7. Kessel nach Anspruch 1, dadurch gekennzeichnet, daß der Dampferzeuger eine Verdampfungsrohrgruppe (104) beinhaltet, die in einem Schutzgehäuse angeordnet ist, dessen Einlaß mit der Basis der Mischkammer (103) für die Rauchgase in Verbindung steht und dessen Auslaß zu einem Wärmetauscher (105) führt.

8. Kessel nach Anspruch 1, dadurch gekennzeichnet, daß der Dampferzeuger einen Überhitzer (204) beinhaltet, dessen Einlaß mit der Basis der Mischkammer (203) für die Rauchgase in Verbindung steht und dessen Auslaß zu einem Wärmetauscher (205) führt.

9. Kessel nach Anspruch 1, dadurch gekennzeichnet, daß der Erzeuger für das überhitzte Wasser eine Überhitzungsrohrgruppe (404) beinhaltet, deren Einlaß mit der Basis der Mischkammer (403) für die Rauchgase in Verbindung steht und deren Auslaß zu einem Wärmetauscher (405) führt.

10. Betriebsverfahren für einen Mischkessel nach einem der Ansprüche 1 bis 9, dadurch gekennzeichnet, daß zunächst die Brennkammer (101, 201, 301, 401) für den Haushaltsmüll in Betrieb

8

gesetzt und danach die Dampf- oder Heißwasserproduktion des Kessels durch geregelte Zufuhr von Hilfsbrennstoff zu den Brennern (131, 132; 231, 232; 331, 332; 431) der Brennkammer (102, 202; 301; 401) für den Hilfsbrennstoff an den Bedarf angepaßt wird.

11. Betriebsverfahren für einen Mischkessel nach einem der Ansprüche 1 bis 4 und 7 bis 9, dadurch gekennzeichnet, daß nur die Brennkammer für den Haushaltsmüll in Betrieb gesetzt wird und daß die Rohrleitungen der Wände der Brennkammer (102, 202) unter Mitwirkung der Zirkulation mit inaktivem Hilfsbrennstoff gespeist werden.

12. Betriebsverfahren für einen Mischkessel mit einer gemeinsamen Brennkammer (301, 401) nach einem der Ansprüche 1 oder 6 bis 9, dadurch gekennzeichnet, daß ein Luftüberschuß auf den Feuerungsrost (320, 420) für den Haushaltsmüll geleitet wird, und daß die Durchflußmenge von Verbrennungsluft durch die Brenner (331, 332; 431) für den Hilfsbrennstoff unter Einbeziehung der Sauerstoffrückstände reduziert wird, die in dem vom Feuerungsrost (320; 420) abgegebenen Gasstrahl noch vorhandenen sind.

## Claims

1. Compound furnace with integrated and regulatable backup heating, notably for supplying a turbogenerator or an industrial network or for urban heating, of the type constituted by a combustion installation coupled to a steam generator, the combustion installation comprising a chamber (101, 201, 301, 401) for the combustion of domestic refuse, a chamber (102, 202, 301, 401) for the combustion of auxiliary fuel, and a chamber (103, 203, 303, 403) for mixing the combustion gases, the said chambers (101, 102, 103; 201, 202, 203; 301, 303; 401, 403) being juxtaposed one behind the other and being separated by substantially vertical solid walls (112, 113; 212, 213; 312; 412) in such a manner as to define the circulation circuit of the combustion gases, the said separating walls being interrupted in the upper part of the furnace so as to define openings (115, 116; 215, 216; 315; 415) for passage of the combustion gases from one chamber to the other, characterised in that the lateral walls and the separating walls of the said chambers (101, 102, 103; 201, 202, 203; 301, 303; 401, 403) are constituted by pipes of a single cold circulation circuit for water-steam emulsion or for hot water, respectively, in that the single cold circuit is constituted by the panels of pipes of each wall of the said chambers (101, 102, 103; 201, 202, 203; 301, 303), assembled in parallel, in that the panel of pipes of each separating wall (112, 113; 212, 213; 312) comprises a horizontal header (144, 145; 244, 245; 344; 444) situated in the upper part of each of the said walls, and prolonged by an assembly of spaced discharge tubes forming a vertical grid situated across the opening (115, 116; 215, 216; 315; 415) for passage of the combustion gases.

2. Furnace according to claim 1, characterised in that the combustion chamber (101, 201) for the domestic refuse is of the mobile grid type and constitutes the head chamber of the furnace.

3. Furnace according to claim 2, characterised in that the combustion chamber (102, 202) for auxiliary fuel constitutes the intermediate chamber of the furnace, and comprises at least two superimposed burners (131, 132; 231, 232) with frontal heating.

4. Furnace according to claim 1, characterised in that the panels of pipes of the said cold circuit of the combustion chamber (102, 202) for auxiliary fuel are connected to pumps for assisting the natural circulation.

5. Furnace according to claim 1, characterised in that the combustion equipment is constituted by a single combustion chamber (301, 401) comprising at least one burner (331, 332; 431) for auxiliary fuel, assembled at a distance above a mobile grid (320, 420) for combustion of domestic refuse, the said combustion chamber (301, 401) communicating in its upper part with the chamber (303, 403) for mixing the combustion gases.

6. Furnace according to any one of the claims 1 to 5, characterised in that the said auxiliary fuel belongs to the group comprising powdered coal, fuel, and liquid and/or gaseous fuels.

7. Furnace according to claim 1, characterised in that the steam generator comprises a bank of evaporation tubes (104) assembled in an enclosure whose entry communicates with the base of the chamber (103) for mixing the combustion gases, and the outlet leads to an economiser (105).

8. Furnace according to claim 1, characterised in that the steam generator comprises a superheater (204) whose entry communicates with the base of the chamber (203) for mixing the combustion gases, and the outlet leads to an economiser (205).

9. Furnace according to claim 1, characterised in that the superheated water generator comprises a bank of superheating tubes (404) whose entry communicates with the base of the chamber (403) for mixing the combustion gases, and the outlet leads to an economiser (405).

10. Method of operating a compound furnace according to any one of the claims 1 to 9, characterised in that basically one operates the chamber (101, 201, 301, 401) for the combustion of domestic refuse, and then one adjusts, as required, the production of steam or of hot water from the furnace by supplying, in a regulated manner, the burners (131, 132; 231, 232; 331, 332; 431) of the chamber (102, 202; 301; 401) for the combustion of auxiliary fuel.

11. Method of operating a compound furnace according to any one of the claims 1 to 4 and 7 to 9, characterised in that only the chamber (101, 201) for the combustion of domestic refuse is operated, and that one supplies with assisted circulation the pipes of the walls of the inoperative chamber (102, 202) for the combustion of auxiliary fuel.

12. Method of operating a compound furnace, with a common combustion chamber (301, 401), according to any one of the claims 1 or 6 to 9, characterised in that one distributes a superfluity of air to the grid (320, 420) for the combustion of domestic refuse, and in that one reduces the delivery of combustion air introduced by the burners (331, 332; 431) for auxiliary fuel, proportionately to the residual oxygen left remaining in the gaseous stream issuing from the said combustion grid (320; 420).

FIG. 1b

FIG. 1a

FIG. 2a

FIG. 2b

EP 0 198 758 B1

# FIG. 3

# FIG. 4